Europäisches Patentamt

European Patent Office

Office européen des brevets

(19)

(11) Numéro de publication : **0 044 246**
**B1**

(12) # FASCICULE DE BREVET EUROPÉEN

(45) Date de publication du fascicule du brevet :
05.06.85

(51) Int. Cl.⁴ : **G 21 K   5/08**, G 21 F   7/06

(21) Numéro de dépôt : 81401088.0

(22) Date de dépôt : 07.07.81

(54) Installation d'irradiation comportant un dispositif de transfert et de positionnement pour irradiation de cibles.

(30) Priorité : 10.07.80 FR 8015404

(43) Date de publication de la demande :
20.01.82 Bulletin 82/03

(45) Mention de la délivrance du brevet :
05.06.85 Bulletin 85/23

(84) Etats contractants désignés :
BE CH DE FR GB IT LI NL SE

(56) Documents cités :
DE-A- 2 403 349
FR-A- 2 038 857
US-A- 3 556 486
TH. JAEGER: "Grundzüge der Strahlenschutztech-nik", Springer Verlag, 1960, pages 206, 264, 265, Berlin (DE);
NUCLEAR INSTRUMENTS AND METHODS, vol. 42, 1966, pages 305-306, North-Holland Publishing Co., Amsterdam (NL); P. BLASI et al.: "A system for inserting radioactive sources in vacuum"

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **Bezer, Christian**
**42, Avenue Carnot**
**F-91600 Savigny-sur-Orge (FR)**
Inventeur : **Rouet, Michael**
**11, rue de la Gouttière**
**F-91400 Orsay (FR)**

(74) Mandataire : **Mongrédien, André et al**
**c/o BREVATOME 25, rue de Ponthieu**
**F-75008 Paris (FR)**

EP 0 044 246 B1

Jouve, 18, rue St-Denis, 75001 Paris, France

## Description

La présente invention a pour objet une installation d'irradiation comportant un dispositif de transfert et de positionnement pour irradiation de cibles.

On connaît, en particulier dans l'industrie nucléaire, un grand nombre d'installations situées à l'intérieur d'une enceinte de protection, dans lesquelles on introduit une pièce que l'on récupère après irradiation. Ce sont par exemple des accélérateurs de particules, des réacteurs, des sources, etc...

Plus généralement, on connaît, en dehors du domaine de l'industrie nucléaire, des installations situées dans une enceinte de protection protégeant l'opérateur contre un milieu hostile dans lesquelles on introduit un élément à partir de l'extérieur de l'enceinte sans rupture de la protection étanche contre le milieu hostile.

Une installation de ce genre sera par exemple une installation pour irradiation par cyclotron constituée par une enceinte à vide à l'intérieur de laquelle la pièce à introduire, une cible à irradier dans ce cas, est positionnée. La mise en place de la cible à l'intérieur du cyclotron, son positionnement pour irradiation et sa récupération après irradiation nécessitent la présence d'opérateurs dans l'enceinte de protection à l'intérieur de laquelle se trouve l'installation pour irradiation par cyclotron. Ces opérateurs sont ainsi exposés au milieu hostile, par exemple à une irradiation dans le cas d'une installation nucléaire.

On connaît, selon l'art antérieur, des moyens de télémanipulation, encore appelés télémanipulateurs, qui permettent à un opérateur situé à l'extérieur d'une enceinte de protection d'effectuer un certain nombre d'opérations à l'intérieur de ladite enceinte tout en étant efficacement protégé, en particulier vis-à-vis des irradiations dans le cas d'une installation nucléaire. Un télémanipulateur de ce genre est par exemple décrit dans le FR-A-2 278 457.

Cependant, de tels moyens ne permettent pas d'introduire une pièce, par exemple une cible à irradier, à partir de l'extérieur de l'enceinte de protection sans rupture d'étanchéité de l'installation. En effet, un vide très poussé règne à l'intérieur de l'installation d'irradiation par cyclotron. L'introduction de la cible à l'intérieur de l'installation puis sa récupération après irradiation doivent s'effectuer sans casser le vide régnant à l'intérieur de cette installation.

L'invention a précisément pour objet une installation d'irradiation comportant un dispositif de transfert et de positionnement pour irradiation de cibles qui permet de résoudre les problèmes qui se posent par suite de la nécessité de maintenir la protection de l'opérateur vis-à-vis du rayonnement ainsi que l'étanchéité de l'installation pour irradiation par cyclotron à l'intérieur de laquelle règne un vide poussé. L'invention permet le transfert des cibles à irradier, leur mise en place, leur positionnement pour irradiation, la récupération après irradiation ainsi que le réglage et le contrôle du bon fonctionnement des moyens de positionnement, tout en permettant aux opérateurs de travailler totalement à l'abri des irradiations.

Plus précisément, l'installation d'irradiation comportant un appareil d'irradiation muni d'un sas d'accès d'axe $Z_3Z_4$ à l'intérieur duquel règne un vide poussé, ledit appareil étant situé dans une enceinte de protection délimitée par une paroi blindée et un dispositif de transfert et de positionnement de cibles à irradier, se caractérise en ce que le dispositif de transfert et de positionnement comporte un ensemble télescopique d'axe $X_1X_2$, situé à l'intérieur de l'enceinte de protection, ledit ensemble télescopique comportant une extrémité libre apte à porter la cible à positionner, et étant disposé sur un support propre à être animé d'un mouvement permettant de le déplacer entre une première position de manipulation de la cible et de contrôle du bon fonctionnement des organes constitutifs et une seconde position dans laquelle l'axe $X_1X_2$ de l'ensemble télescopique est confondu avec l'axe $Z_3Z_4$ du sas d'accès et l'extrémité libre introduite dans ce sas.

Selon un premier mode de réalisation de l'invention, la cible à irradier est manipulée à la main avant son irradiation. Il est possible aux opérateurs de pénétrer à l'intérieur de l'enceinte de protection et de placer manuellement la cible à irradier sur l'extrémité libre de l'ensemble télescopique. Après mise en place de la cible, l'opérateur sort de l'enceinte de protection. L'ensemble télescopique est déplacé, au moyen du support, entre la position de départ, appelée première position de manipulation de la cible et de contrôle du bon fonctionnement des organes constitutifs, et une seconde position dans laquelle l'axe $X_1X_2$ de l'ensemble télescopique est aligné avec l'axe $Z_3Z_4$ du sas d'accès de l'installation d'irradiation. L'ensemble télescopique est alors déployé pour introduire l'extrémité libre de l'ensemble télescopique à l'intérieur du sas.

Après irradiation il n'est plus possible aux opérateurs de pénétrer à l'intérieur de l'enceinte de protection en raison de l'activité de la cible irradiée. Le dispositif de transfert de l'invention permet de reprendre la cible à l'intérieur du sas de l'installation d'irradiation, puis de déplacer l'ensemble télescopique de ladite deuxième position à la première position et de déposer la cible irradiée dans un récipient de stockage des cibles irradiées tel qu'un château de protection. Une fois la cible dans le château de protection, il est possible aux opérateurs de pénétrer à nouveau à l'intérieur de l'enceinte de protection et d'en sortir le château de protection.

Toutefois, afin de permettre aux opérateurs de travailler totalement à l'abri des irradiations, le dispositif de transfert et de positionnement des cibles à irradier de l'invention comporte de préférence, selon un second mode de réalisation, une enceinte blindée étanche, dite de manipulation, disposée contre la face extérieure du blindage de l'enceinte de protection et reliée à cette dernière par un canal de communication obturable, un embout dont l'extrémité libre est engagée dans le canal de communication, l'extrémité libre comportant des moyens d'étanchéité capables de coopérer avec des moyens d'étanchéité complémentaires portés par l'extrémité libre de l'ensemble télescopique, l'autre extrémité de l'embout étant équipée de moyens de fermeture escamotable et escamotés lorsque les moyens d'étanchéité portés par l'extrémité libre de l'embout et ceux portés par l'extrémité libre de l'ensemble télescopique coopèrent, l'axe $X_1X_2$ de l'ensemble télescopique étant confondu avec l'axe $Z_1Z_2$ du canal de communication lorsque l'ensemble télescopique se trouve dans ladite première position, permettant ainsi le positionnement de la cible sur l'extrémité libre de l'ensemble télescopique depuis l'intérieur de l'enceinte.

Suivant un mode de réalisation avantageux de l'invention, le support de l'ensemble télescopique est susceptible de pivoter autour de son axe vertical, des moyens moteurs télécommandables étant prévus, d'une part, pour amener, par rotation autour dudit axe, l'ensemble télescopique de la première à la deuxième position et vice versa et, d'autre part, pour amener l'ensemble télescopique de la position rétractée à la position déployée et vice versa.

Suivant un autre mode de réalisation avantageux de l'invention, l'ensemble télescopique est agencé de façon telle que son extrémité libre, porteur de la cible, puisse être animée d'un mouvement de rotation autour de l'axe horizontal de l'ensemble.

Suivant un autre mode de réalisation avantageux de l'invention, l'ensemble télescopique comprend deux tubes coaxiaux à l'extrémité commune libre desquels est disposée la cible et qui permettent la circulation d'un liquide de refroidissement de la cible.

D'autres caractéristiques de l'invention, s'utilisant de préférence en même temps que celles qui précèdent, apparaîtront dans le cadre de la description qui suit et qui est donnée en rapport avec un mode de réalisation particulièrement avantageux de l'installation et des moyens de positionnement illustrés par les dessins dans lesquels :

la figure 1 est une vue d'ensemble schématique, en plan, montrant l'installation et les moyens de positionnement déployés dans une première position ; les figures 2, 3 et 4 montrent respectivement les moyens de positionnement rétractés dans la première position, les moyens de positionnement rétractés dans une deuxième position et les moyens de positionnement déployés dans la deuxième position ;

la figure 5 est une vue en élévation, à plus grande échelle, montrant schématiquement des détails des moyens de positionnement, et

les figures 6 et 7 montrent, à plus grande échelle, encore des détails de l'installation et des moyens de positionnement.

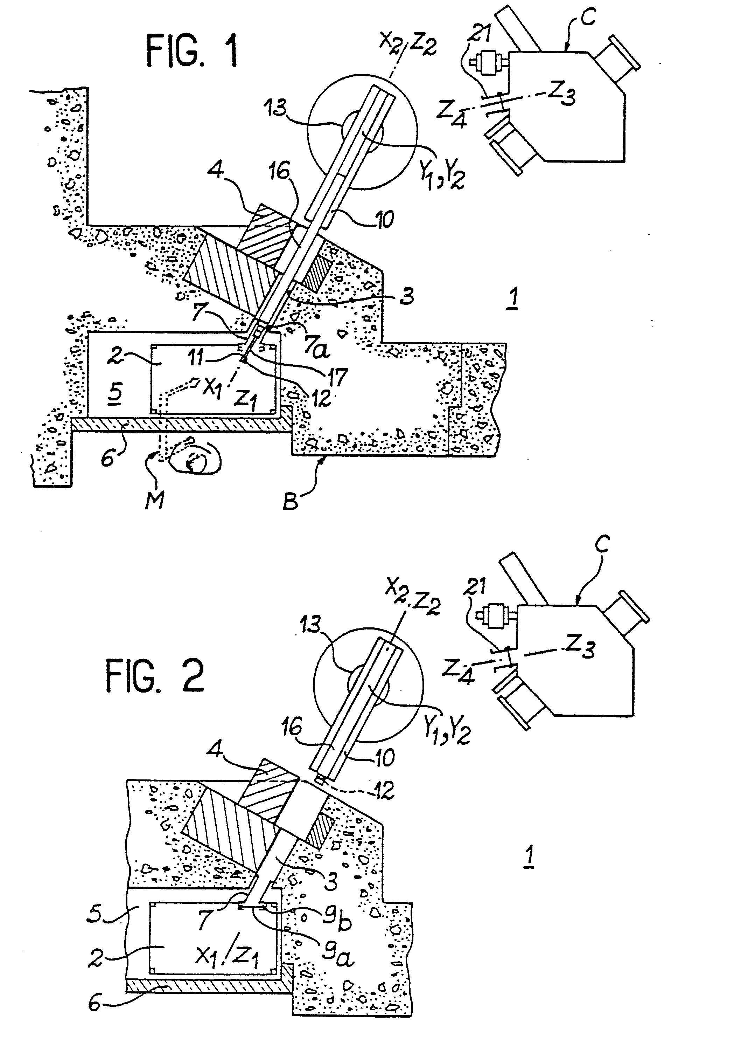

Comme visible sur les figures 1 à 4, un cyclotron schématiquement désigné en C est disposé à l'intérieur d'une salle 1 entourée d'un blindage B, par exemple en béton, une enceinte blindée 2, dite de manipulation, étant disposée au voisinage d'une face extérieure du blindage B et communiquant avec la salle 1 grâce à un canal 3 d'axe $Z_1Z_2$, obturable par exemple à l'aide d'une porte blindée escamotable 4, autorisant l'introduction à l'intérieur de l'enceinte 2, lorsque la porte 4 se trouve en position escamotée comme montré sur la figure 1, des moyens de positionnement de la cible à irradier dont il sera question plus loin.

L'enceinte 2 se trouve disposée à l'intérieur d'un espace 5 délimité par le blindage B et par une paroi de blindage transparent 6, par exemple en verre au plomb ; elle est équipée de moyens télécommandables ou télémanipulateurs M en soi connus qui permettent à un opérateur travaillant à l'extérieur de l'enceinte et de la salle de procéder à la mise en place de la cible et à la récupération de celle-ci après irradiation ainsi qu'au contrôle du bon fonctionnement des organes constitutifs des moyens de positionnement ; l'opérateur, se tenant à l'extérieur tant de la salle 1 que de l'enceinte 2, est donc protégé par le blindage B et la paroi 6.

Les cibles à irradier sont de préférence introduites dans l'enceinte de manipulation 2 par transport pneumatique. Les cibles irradiées en sont extraites de la même manière.

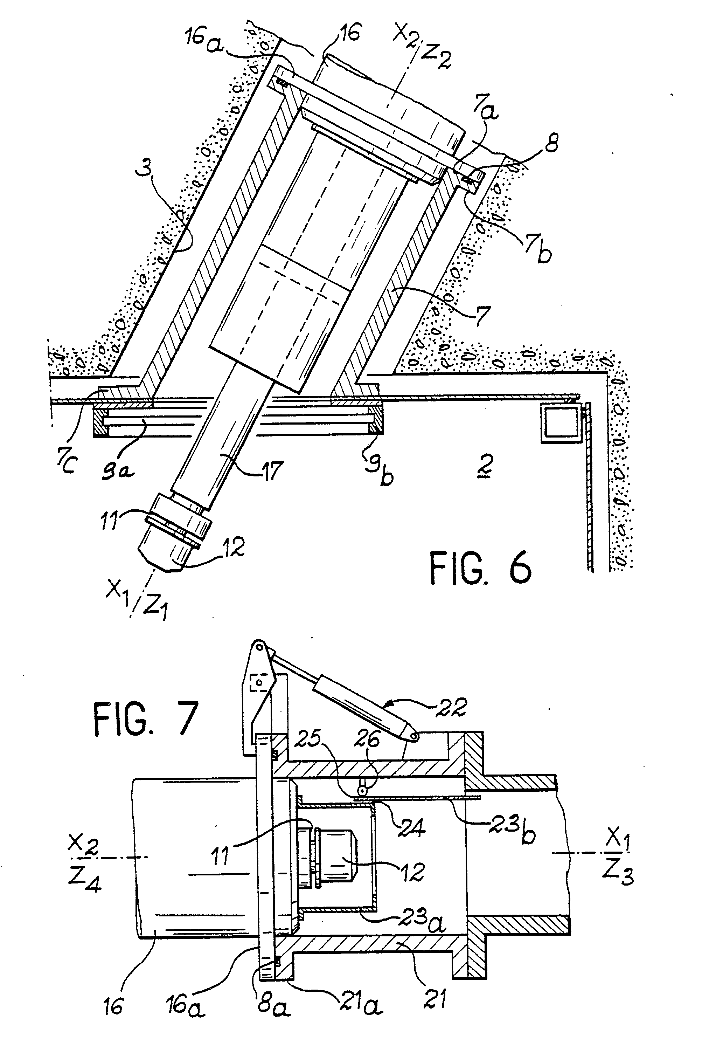

L'enceinte 2 comporte un embout 7 dont l'extrémité libre 7a peut être engagée, comme montré avec plus de détails à la figure 6, dans le canal 3, ladite extrémité libre comportant des moyens d'étanchéité, constitués par exemple par une bride 7b munie d'un joint torique 8, capables de coopérer avec des moyens complémentaires portés par des moyens de support de la cible décrits plus loin, l'autre extrémité 7c, de l'embout étant équipée de moyens escamotables de fermeture, par exemple du type porte étanche à guillotine 9a, schématiquement visible figure 2 ; la porte 9a est portée par un cadre 9b visible figure 6 et se trouve escamotée lorsque coopèrent le joint torique 8 et les moyens d'étanchéité portés par les moyens de support de la cible.

Ces moyens de support de la cible sont constitués d'un ensemble télescopique globalement désigné en 10, d'axe horizontal $X_1X_2$ par l'extrémité libre 11 duquel est portée une cible 12.

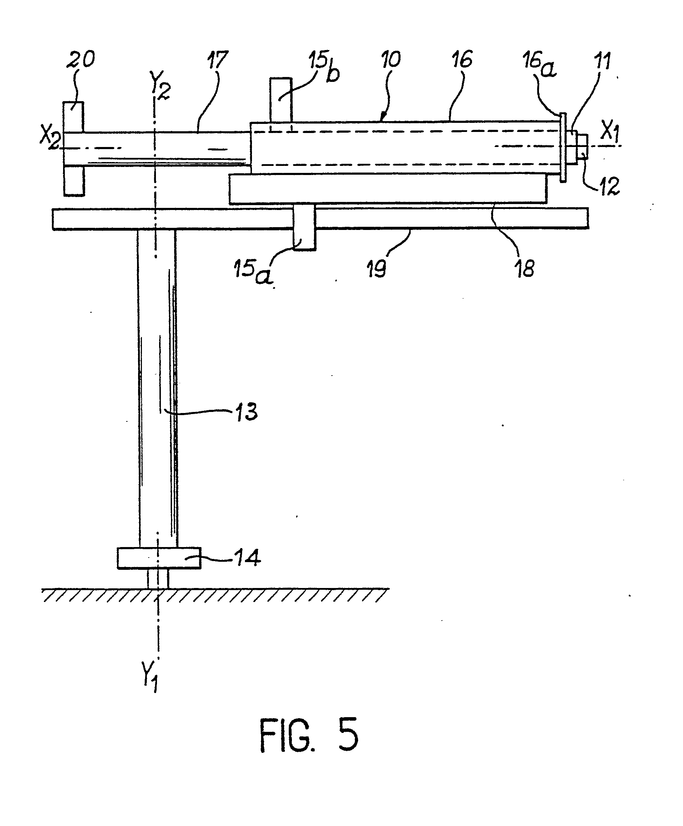

L'ensemble 10 est porté par un support 13 capable de l'amener notamment d'une première position dans laquelle la cible 12 est située dans l'enceinte de manipulation 2 où elle peut être mise en place et récupérée après irradiation et dans laquelle il est possible de contrôler le bon fonctionnement de ses organes constitutifs, à une seconde position dans laquelle il coopère avec le cyclotron C et vice versa ; dans le présent mode de réalisation, le support 13 est monté pivotant autour d'un axe vertical $Y_1Y_2$, par rotation autour duquel des premiers moyens moteurs télécommandables globalement désignés en 14, figure 5, permettent d'amener l'ensemble 10 de la première position à la seconde position et vice versa.

Suivant des variantes non décrites en détail, l'ensemble 10 est amené de la première position à la seconde et vice versa par un mouvement de translation dans un plan horizontal ou dans un plan vertical ou par un autre mouvement de pivotement notamment autour d'un axe horizontal ou encore par un mouvement complexe résultant de la combinaison d'au moins certains des susdits mouvements particuliers.

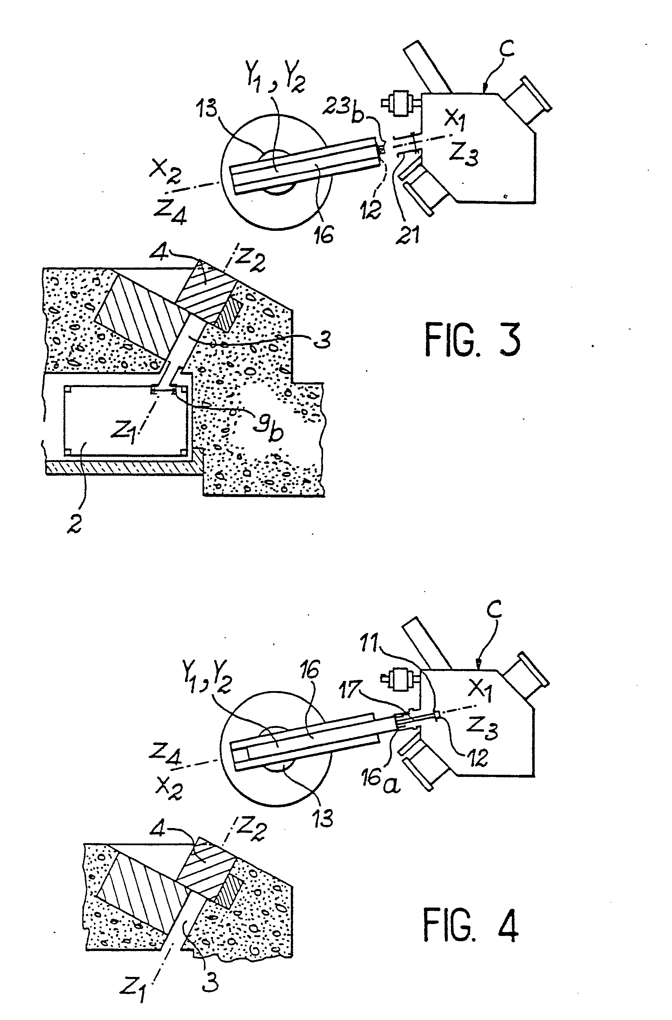

Des deuxièmes moyens moteurs télécommandables globalement désignés en 15a et 15b figure 5, permettent d'amener l'ensemble 10 de la position rétractée visible par exemple figures 2 et 3 à la position déployée visible par exemple figures 1 et 4.

L'ensemble 10 comporte un élément tubulaire extérieur 16 coaxial avec un élement tubulaire intérieur 17. L'élément 16 comporte les moyens d'étanchéité, par exemple une bride 16a, susmentionnée de l'ensemble 10 qui doivent coopérer notamment avec l'embout 7 ; cet ensemble 10 est porté par un chariot 18 déplaçable sur un rail 19 selon l'axe $X_1X_2$ grâce aux moyens moteurs 15a.

L'élément 17 est déplaçable à l'intérieur de l'élément 16 par rapport à celui-ci et suivant l'axe $X_1X_2$ grâce aux moyens moteurs 15b.

Les moyens moteurs 15a et 15b peuvent être du type moteur électrique.

C'est l'élément tubulaire intérieur 17 qui comporte l'extrémité 11 sur laquelle est disposée la cible 12.

L'ensemble télescopique 10 est avantageusement agencé de telle façon que l'extrémité libre 11 portant la cible 12 puisse être animée d'un mouvement de rotation autour de l'axe $X_1X_2$. Pour ce faire, on peut prévoir des moyens moteurs schématiquement montrés en 20 et capables d'imprimer à l'élément 17 un mouvement de rotation autour de l'axe $X_1X_2$, permettant ainsi l'irradiation rotative. L'élément moteur 20 permet aussi d'amener l'extrémité 11 en une position angulaire donnée autour de l'axe $X_1X_2$ et de l'y maintenir dans le cas d'une irradiation sur cible fixe.

Avantageusement, l'élément 17 est constitué de deux tubes coaxiaux non montrés dans le détail et permettant la circulation d'un liquide refroidissant la cible 12.

Avantageusement, la susdite première position du support 13 qui correspond à une première position angulaire autour de l'axe $Y_1Y_2$, est telle que l'axe $X_1X_2$ coïncide avec l'axe $Z_1Z_2$ du canal 3. De cette façon, il est possible d'amener l'extrémité 11 à l'intérieur de l'enceinte 2 en position déployée de l'ensemble 10 et de ramener cette extrémité à l'intérieur de la salle 1 en position rétractée de l'ensemble 10.

La susdite deuxième position angulaire du support 13 autour de $Y_1Y_2$ est telle que l'axe $X_1X_2$ est confondu avec l'axe $Z_3Z_4$ d'un sas d'accès 21 du cyclotron schématiquement représenté sur les figures 1 à 4. Dans cette position angulaire, en position déployée de l'ensemble 10, l'extrémité 11 se trouve positionnée à l'intérieur du cyclotron C.

Le passage de la position rétractée de l'ensemble 10 à sa position déployée s'effectue en deux mouvements successifs. Dans le premier de ces deux mouvements et en rapport avec la première position angulaire de l'ensemble 10, l'élément tubulaire 16 est amené de la position montrée figure 3 en une position telle que la bride 16a est placée contre la bride 7b comportant le joint torique 8 ; en rapport avec la deuxième position angulaire de l'ensemble 10, le premier mouvement susdit est tel que la bride 16a se trouve placée au contact d'une bride 21a du sas 21, cette bride 21a pouvant comporter également un joint torique 8a. On indique que le contact entre les brides 16a et 21a peut être amélioré à l'aide de moyens d'agrippage télécommandables 22 en soi connus et non décrits en détail, par exemple au nombre de trois, disposés à 120° l'un par rapport à l'autre autour de l'axe $Z_3Z_4$.

Dans le deuxième des deux susdits mouvements, l'élément 17 est déplacé selon $X_1X_2$ de telle façon que son extrémité 11 soit amenée à l'intérieur de l'enceinte 2 dans le cadre de la première position angulaire et à l'intérieur du cyclotron dans le cadre de la seconde position angulaire.

Dans la première position angulaire, la porte 9 est alors escamotée, tout comme la porte 4.

L'opérateur, placé à l'extérieur de l'enceinte 2, peut, grâce aux télémanipulateurs dont l'enceinte 2 est équipée, mettre en place ou récupérer une cible 12 et s'assurer du bon fonctionnement de l'ensemble 10, par exemple de la possibilité de faire tourner l'extrémité 11, c'est-à-dire l'élément 17 autour de l'axe $X_1X_2$, ceci pour le cas où l'on désire effectuer une irradiation rotative de la cible à l'intérieur du cyclotron dans la deuxième position angulaire de l'ensemble 10.

Le passage de l'ensemble 10 de la position déployée à la position rétractée s'effectue également en deux mouvements successifs respectivement inverses, d'abord du deuxième, puis du premier des deux susdits mouvements successifs précédemment détaillés à propos du passage de la position rétractée à la position déployée.

Avantageusement, on prévoit un élément de protection ou coiffe de la cible 12, celle-ci ne devant pas être « découverte », sauf lorsqu'elle est positionnée à l'intérieur du cyclotron C ou de l'enceinte 2.

Cet élément de protection peut être constitué par un embout tubulaire 23a d'axe $X_1X_2$, porté par l'élément 16 et pouvant être fermé par un couvercle 23b basculant autour d'une articulation 24 d'axe horizontal perpendiculaire à $X_1X_2$, comme montré figure 7.

Pour assurer l'ouverture et la fermeture du couvercle 23b, on peut lui faire comporter un prolongement 25 propre à coopérer avec un galet 26 d'axe parallèle à celui de l'articulation 24 et porté par la paroi intérieure du sas 21, en un endroit tel que l'interaction entre ledit galet 26 et le prolongement 25 provoque l'amenée du couvercle de la position de fermeture verticale à la position horizontale d'ouverture lorsque, dans la deuxième position angulaire et à la fin du premier mouvement de passage de la position rétractée à la position déployée de l'ensemble 10, l'élément tubulaire 16 est amené au contact du sas 21.

L'embout 7 comporte un galet équivalent au galet 26 pour assurer l'ouverture du couvercle 23b lorsque l'extrémité 1 doit être amenée à l'intérieur de l'enceinte 2.

Lorsque le susdit premier mouvement est effectué en sens inverse, lors du passage en position rétractée de l'ensemble 10, la fermeture du couvercle 23b se produit dès que cesse l'interaction du galet 26 et du polongement 25.

L'installation et les moyens de positionnement étant ainsi constitués, leur fonctionnement est comme suit.

On amène tout d'abord l'extrémité 11 à l'intérieur de l'enceinte 2.

Pour ce faire, l'ensemble 10 est amené à sa première position angulaire et, après ouverture de la porte blindée 4, le premier mouvement de déploiement amène l'élément 16 en position d'étanchéité contre l'embout 7. La porte étanche à guillotine 9a est alors ouverte et, à l'issue du deuxième mouvement de déploiement de l'ensemble 10, l'extrémité 11 se trouve positionnée à l'intérieur de l'enceinte 2, comme montré figure 1.

On procède alors, à l'aide des télémanipulateurs M, à la mise en place de la cible à irradier sur l'extrémité 11. On peut contrôler le bon fonctionnement du mécanisme capable d'imprimer la rotation à la cible et procéder à un test d'étanchéité du système de refroidissement de la cible.

Le deuxième, puis le premier mouvement de l'ensemble 10, effectués en sens inverse, amènent alors celui-ci à la position rétractée montrée figure 2.

A la fin du mouvement de retrait de l'élément 17 (mouvement en sens inverse du deuxième mouvement de déploiement de l'ensemble 10), la porte 9a est refermée, rétablissant l'étanchéité dans l'enceinte 2.

A la fin du mouvement de retrait de l'élément 16 (mouvement en sens inverse du premier mouvement de déploiement de l'ensemble 10), l'ensemble 10 est complètement rétracté et la porte blindée 4 refermée, la cible se trouvant à l'intérieur de son élément de protection 23a.

A l'aide des moyens moteurs 14, l'ensemble 10 est ensuite amené à la deuxième position angulaire montrée figure 3.

Le déploiement de l'ensemble est alors effectué pour amener la cible 12 en position d'irradiation à l'intérieur du cyclotron C.

A la fin du premier mouvement, l'élément 16 est amené en position de coopération avec le sas 21, comme décrit plus haut.

A l'intérieur du sas est alors établie une pression identique à celle régnant dans la chambre du cyclotron, l'étanchéité du sas étant assurée du côté cyclotron par une vanne à vide non montrée et, du côté ensemble 10, par la coopération des brides 16a et 21a, comme décrit plus haut.

Une fois la pression correcte établie à l'intérieur du sas 21, la vanne à vide non montrée est ouverte et, dans le cadre du deuxième mouvement décrit plus haut, l'extrémité 11 est amenée à la position d'irradiation à l'intérieur de la chambre du cyclotron, comme montré figure 4.

A la fin de l'irradiation, l'ensemble des déplacements venant d'être décrits est effectué en sens inverse pour ramener l'extrémité 11 à l'intérieur de l'enceinte 2 en vue de la récupération de la cible irradiée.

En suite de quoi et quel que soit le mode de réalisation adopté, on dispose ainsi d'une installation et de moyens de positionnement du genre en question dont les caractéristiques et le fonctionnement ressortent suffisamment de ce qui précède pour qu'il soit inutile d'insister à ce sujet et qui présentent, par rapport à ceux qui existent déjà, de nombreux avantages, dont notamment :

— celui de permettre le travail des opérateurs à l'abri de toute irradiation,

— celui de permettre, sans changement d'éléments constitutifs, l'irradiation sur cible fixe et l'irradiation sur cible rotative.

Comme il va de soi et comme il résulte d'ailleurs déjà de ce qui précède, l'invention ne se limite nullement à ceux de ses modes d'application et de réalisation qui ont été plus particulièrement envisagés.

En particulier, bien que la description qui précède fasse référence à une installation pour irradiation par cyclotron, il est bien entendu que l'invention s'applique plus généralement à une installation pour irradiation située à l'intérieur d'une enceinte de protection dans laquelle on introduit une pièce que l'on récupère après irradiation. D'une manière encore plus générale, l'invention s'applique, en dehors du domaine de l'industrie nucléaire, au cas d'une installation quelconque située à l'intérieur d'une enceinte protégeant l'opérateur contre un milieu hostile.

Comme on l'a dit plus haut, l'utilisation d'un télémanipulateur M et de l'enceinte de manipulation 2, bien qu'elles permettent aux opérateurs de travailler à l'abri de toute irradiation ne sont pas indispensables. On peut envisager une manipulation manuelle de la cible avant son irradiation.

Dans cette variante de réalisation de l'invention, il est nécessaire que les opérateurs pénètrent dans l'enceinte de protection 1. Ladite première position angulaire correspond alors à une position pour laquelle l'extrémité libre 11 de l'ensemble télescopique 10, qui peut alors ne pas être en position déployée, coopère avec un récipient de stockage des cibles irradiées.

Après irradiation, la cible irradiée est transférée du cyclotron, c'est-à-dire de ladite seconde position, à ladite première position pour être déposée à l'intérieur du récipient de stockage des cibles irradiées. Une fois la cible enfermée dans ce récipient, il est de nouveau possible aux opérateurs de pénétrer à l'intérieur de l'enceinte de protection 1 et d'évacuer le récipient de stockage contenant la cible.

## Revendications

1. Installation d'irradiation comportant un appareil d'irradiation muni d'un sas d'accès (21) d'axe ($Z_3Z_4$) à l'intérieur duquel règne un vide poussé, ledit appareil étant situé dans une enceinte de protection délimitée par une paroi blindée (B) et un dispositif de transfert et de positionnement de cibles à irradier, caractérisée en ce que le dispositif de transfert et de positionnement comporte un ensemble télescopique (10) d'axe ($X_1X_2$) situé à l'intérieur de l'enceinte de protection (1), ledit ensemble télescopique (10) comportant une extrémité libre (11) apte à porter la cible (12) à positionner, ledit ensemble étant disposé sur un support (13) propre à être animé d'un mouvement permettant de déplacer l'ensemble télescopique (10) entre une première position de manipulation de la cible et de contrôle du bon fonctionnement des organes constitutifs et une seconde position dans laquelle l'axe ($X_1X_2$) de l'ensemble télescopique (10) est aligné avec l'axe ($Z_3Z_4$) du sas d'accès (21) et l'extrémité libre (11) introduite dans le sas (21).

2. Installation selon la revendication 1, caractérisée en ce qu'elle comporte une enceinte (2) blindée étanche, dite de manipulation disposée contre la face extérieure de la paroi blindée (B) de l'enceinte de protection (1) et reliée à cette dernière par un canal de communication (3) obturable, d'axe ($Z_1Z_2$), un embout (7) dont l'extrémité libre (7a) est engagée dans le canal de communication (3), l'extrémité libre (7a) comportant des moyens d'étanchéité capables de coopérer avec des moyens d'étanchéité complémentaires portés par l'extrémité libre (11) de l'ensemble télescopique (10), l'autre extrémité de l'embout étant équipée de moyens de fermeture escamotables et escamotés lorsque les moyens d'étanchéité portés par l'extrémité libre de l'embout et ceux portés par l'extrémité libre (11) de l'ensemble télescopique (10) coopèrent, l'axe ($X_1X_2$) de l'ensemble télescopique (10) étant confondu avec l'axe ($Z_1Z_2$) du canal de communication (3) lorsque l'ensemble télescopique se trouve dans ladite première position permettant ainsi le positionnement de la cible (12) sur l'extrémité libre de l'ensemble télescopique depuis l'intérieur de l'enceinte (2).

3. Installation selon la revendication 2, caractérisée par le fait que le support (13) de l'ensemble télescopique (10) est susceptible de pivoter autour de son axe vertical ($Y_1Y_2$), des moyens moteurs télécommandables (14, 15a, 15b) étant prévus, d'une part, pour amener, par rotation autour dudit axe ($Y_1Y_2$) l'ensemble télescopique (10) de la première à la deuxième position et vice versa et, d'autre part, pour amener l'ensemble télescopique (10) de la position rétractée à la position déployée et vice versa.

4. Installation selon l'une quelconque des revendications 2 et 3, caractérisée par le fait que l'ensemble télescopique (10) est agencé de façon telle que son extrémité libre (11), porteuse de la cible (12), puisse être animée d'un mouvement de rotation autour de l'axe horizontal ($X_1X_2$) de l'ensemble.

5. Installation selon l'une quelconque des revendications 2 à 4, caractérisée par le fait que l'ensemble télescopique (10) comprend deux tubes coaxiaux (16, 17) à l'extrémité commune libre desquels est disposée la cible (12) et qui permettent la circulation d'un liquide de refroidissement de la cible (12).

## Claims

1. Irradiation installation comprising an irradiation apparatus having an access lock (21) with an axis ($Z_3Z_4$) in whose interior there is a high vacuum, said apparatus being located in a protective confinement delimited by a strong wall (B) and a device for transferring and positioning targets to be irradiated, characterized in that the transfer and positioning device comprises a telescopic assembly (10) having axis ($X_1X_2$) located within the protective confinement (1), said telescopic assembly (10) having a free end (11) adapted to carry the target (12) to be positioned, said assembly being disposed on a support (13) adapted to be actuated in a movement permitting displacement of the telescopic assembly (10) between a first position for manipulation of the target and checking the performance of its constituent units, and a second position in which the axis ($X_1X_2$) of the telescopic assembly (10) is aligned with the axis ($Z_3Z_4$) of the access lock (21) and the free end (11) is introduced into the lock (21).

2. Installation according to Claim 1, characterized in that it comprises a sealed armoured manipulation container (2), located against the external face of the strong wall (B) of the protective confinement (1) and connected to the latter by a sealable communication duct (3) having axis ($Z_1Z_2$), an end fitting (7) whose free end (7a) is engaged in the communication duct (3), the free end (7a) having sealing means adapted to cooperate with complementary sealing means carried on the free end (11) of the telescopic assembly (10), the other end of the end fitting being equipped with retractable closing means, and closed when the sealing means carried by the free end of the end fitting cooperate with those on the free end (11) of the telescopic assembly (10), the axis ($X_1X_2$) of the telescopic assembly (10) being coincident with the axis ($Z_1Z_2$) of the communication duct (3) when the telescopic assembly is in its first position, thereby permitting positioning of the target (12) at the free end of the telescopic assembly inside the container (2).

3. Installation according to Claim 2, characterized in that the support (13) of the telescopic assembly (10) is pivotable around its vertical axis (Y₁Y₂), remotely-commandable motor means (14, 15a, 15b) being provided, on the one hand to move the telescopic assembly (10) from its first to its second positions, by rotation around the said axis (Y₁Y₂), and on the other hand, to move the telescopic assembly (10) from its retracted to its deployed position, and vice versa.

4. Installation according to either of Claims 2 and 3, characterized in that the telescopic assembly (10) is actuated in such a manner that its free end (11) carrying the target (12), can be rotated around the horizontal axis (X₁X₂) of the assembly.

5. Installation according to any one of Claims 2 to 4, characterized in that the telescopic assembly (10) comprises two coaxial tubes (16, 17) at the common free end of which is located the target (12) and which permit circulation of a cooling fluid for the target (12).

**Patentansprüche**

1. Bestrahlungsanlage, enthaltend eine Bestrahlungsvorrichtung, welche eine eine Achse (Z₃Z₄) aufweisende Schleusenkammer (21), in welcher ein hohe Vakuum herrscht, aufweist und in einem durch eine Schutzwand (B) umgrenzten Sicherheitsraum angeordnet ist, und eine Überführungs- und Ausrichtvorrichtung für zu bestrahlende Targets, dadurch gekennzeichnet, daß die Überführungs- und Ausrichtvorrichtung eine eine Achse (X₁X₂) aufweisende und im Inneren des Sicherheitsraums (1) angeordnete Teleskopanordnung (10) aufweist, welche ein zum Tragen des auszurichtenden Targets (12) eingerichtetes freies Ende (11) hat und auf einer Halterung (13) gelagert ist, welche in Bewegung versetzbar ist, um die Teleskopanordnung (10) zwischen einer ersten Stellung zum Manipulieren des Targets und zur Überprüfung des ordnungsgemäßen Funktionierens der zugehörigen Teile und einer zweiten Stellung zu bewegen, in welcher die Achse (Z₁Z₂) der Teleskopanordnung (10) mit der Achse (Z₃Z₄) der Schleusenkammer (21) fluchtet und das freie Ende (11) in die Schleusenkammer (21) eingeführt ist.

2. Anlage nach Anspruch 1, dadurch gekennzeichnet, daß sie eine abgeschirmte und dichte sogenannte Manipulationskammer (2) aufweist, welche an der Außenseite der Schutzwand (B) des Sicherheitsraums (1) angeordnet und mit Letzterem über einen eine Achse (Z₁Z₂) aufweisenden, verschließbaren Verbindungskanal (3) verbunden ist, daß ein mit einem freien Ende (7a) im Verbindungskanal (3) angeordneter Rohrstutzen (7) an seinem freien Ende (7a) mit Dichtungseinrichtungen versehen ist, welche mit am freien Ende (11) der Teleskopanordnung (10) angeordneten komplementären Dichtungseinrichtungen zusammenwirken, während das andere Ende des Rohrstutzens mit zum Verschwinden bringbaren Verschlußeinrichtungen versehen ist, welche beim Zusammenwirken der am freien Ende des Rohrstutzens angeordneten Dichtungseinrichtungen mit den am freien Ende (11) der Teleskopanordnung (10) Angeordneten zum Verschwinden gebracht werden, wobei die Achse (X₁X₂) der Teleskopanordnung (10) mit der Achse (Z₁Z₂) des Verbindungskanals (3) koinzidiert, wenn sich die Teleskopanordnung in der genannten ersten Stellung befindet, um das Anbringen und Ausrichten des Targets (12) am freien Ende der Teleskopanordnung im Inneren der Kammer (2) zu ermöglichen.

3. Anlage nach Anspruch 2, dadurch gekennzeichnet, daß die Halterung (13) der Teleskopanordnung (10) um ihre senkrechte Achse (Y₁Y₂) verdrehbar ist, und daß ferngesteuerte Antriebseinrichtungen (14, 15a, 15b) vorgesehen sind, mittels welcher einerseits die Teleskopanordnung (10) durch Verdrehen um die genannte Achse (Y₁Y₂) von der ersten in die zweite Stellung und umgekehrt bringbar ist und andererseits die Teleskopanordnung (10) aus ihrem eingezogenen Zustand in den ausgestreckten Zustand und umgekehrt bringbar ist.

4. Anlage nach einem der Ansprüche 2 und 3, dadurch gekennzeichnet, daß die Teleskopanordnung (10) so ausgebildet ist, daß ihr zum Tragen des Targets (12) eingerichtetes freies Ende (11) um die waagerechte Achse (X₁X₂) der Anordnung verdrehbar ist.

5. Anlage nach einem der Ansprüche 2 bis 4, dadurch gekennzeichnet, daß die Teleskopanordnung (10) zwei koaxiale Rohre (16, 17) aufweist, an deren gemeinsamam freiem Ende das Target (12) angeordnet ist, und welche die Umwälzung einer Kühlflüssigkeit für das Target (12) ermöglichen.

FIG. 1

FIG. 2

FIG. 3

FIG. 4

FIG. 5

FIG. 6

FIG. 7